# EUROPEAN PATENT APPLICATION

(11) **EP 2 407 899 A1**
(43) Date of publication of application: **18.01.2012**
(21) Application number: 11167660.7
(22) Date of filing: 26.05.2011
(51) Int. Cl.: G06F 17/30

(54) **Apparatus, and associated method, for tagging a captured image with geographical indicia**

(30) Priority: 16.07.2010 US 364931 P
(71) Applicant: RESEARCH IN MOTION LIMITED, Waterloo, Ontario N2L 3W8 (CA)
(72) Inventor: D'Souza, Stephen Richard, Ottawa, Ontario K2K 3K1 (CA); Park, Joungwoo, Ottawa, Ontario K2K 3K1 (CA)
(74) Representative: Hibbert, Juliet Jane Grace

(57) **Abstract**

An apparatus, and an associated method, for a mobile device, or other portable electronic device, tags a captured image with geographical indicia. The mobile device includes camera functionality to capture an image. A determination is made of the geographic positioning of the mobile device at, or close to, the time at which the image is captured. A geographical indicia is associated with the geographic positioning. And, the geographical indicia is used to tag the image, such as to provide a name to the image file containing the image.

## Description

### Cross-Reference of Related Application

The present application claims priority to U.S. Provisional Application serial no. 61/364,931 filed on July 16, 2010, the contents of which are incorporated herein by reference.

The present disclosure relates generally to a manner by which to provide identification to an image captured at a portable electronic device, such as a cellular telephone having camera functionality. More particularly, the present disclosure relates to a manner by which to tag the image with a geographical identifier, which is related to the position of the device, when the image is captured.

### Background of the Disclosure

The use of cellular, and analogous, mobile communication devices by which to communicate is widespread. Network infrastructures of cellular, and cellular-like, communication systems encompass many of the populated areas of the world. For many, use of such devices is a necessary aspect of daily life. In general, a user of a mobile device is able to use the mobile device to communicate by way of a network infrastructure if the mobile device is positioned within the coverage area of the network infrastructure. Mobility of communications is provided as communications between the mobile device and the network infrastructure are provided by way of a radio air interface upon which radio signals are communicated.

While early-generation, mobile devices, and the communication systems in which the mobile devices operated, primarily provided for voice communications and only limited data communications, successor-generation devices and systems provide for data-intensive communication services. Additionally, such mobile devices often times now provide a wide array of functionalities in addition to voice-communication functionality. Personal-digital-assistant functionality and the functionality of other portable electronic devices is often times provided often times as the mobile devices often times include sophisticated processing circuitry capable of performing advanced or computationally-intensive processing functions. The devices are, for example, often times capable of playing out audio and video files. And, some mobile devices provide for the creation of such files.

Also, for example, mobile devices sometime include camera functionality. That is to say, such devices provide for the capture of an image, such as a photographic image or a video sequence, formed of a successive sequence of images.

In order to capture the image, or sequence of images, the mobile device includes a visual transducer, which typically includes a lens and light transducer, image-capturing and processing circuitry, and an appropriate amount of storage capacity to store the image at the mobile device. Once captured, the image is typically formatted pursuant to a conventional formatting scheme, such as a JPG format, WMV format, or other appropriate format. The captured image, formatted and stored as a digital file, is also sometimes communicated by the mobile device, such as by attaching the digital file to an email message or otherwise sending the contents of the file, or representations thereof, by way of a radio air interface to another communication station.

The storage capacities of mobile devices are sometimes fairly significant, permitting storage of large numbers of image files at the devices available for subsequent retrieval and viewing. Even when storage capacity at the storage device is relatively small, the files of captured images can be communicated elsewhere. That is to say, even if available storage capacity at the mobile device is small, large numbers of files of captured images can be formed and sent elsewhere, to be available thereat for subsequent retrieval and viewing.

Wheresoever stored, when a stored file is to be retrieved for subsequent review, the file must first be identified so that the appropriate file is retrieved. Most simply, stored files are identified with a numerical identifier, thereby uniquely to identify each stored file. Users of mobile, or other, devices at which files are stored are sometimes able to name the files with identifiers to facilitate subsequent retrieval of the files. While user-provided identifiers generally provide for better identification of the stored image files, use of such identifiers requires the user, or an other, manually to enter the text of the identifier.

A need, therefore, exists to improve upon the deficiencies of the existing operation of such devices.

It is in light of this background information relating to mobile devices that the significant improvements of the present disclosure have evolved.

### Brief Description of the Drawings

Figure 1 illustrates a functional block diagram of a radio communications system in which an embodiment of the present disclosure is operable.

Figure 2 illustrates an exemplary, portable electronic device, forming part of the communications system 10 shown in Figure 1 and which operates in conformity with an embodiment of the present disclosure.

Figure 3 illustrates another view of the portable electronic device, shown in Figures 2, illustrating other aspects of an embodiment of the present disclosure.

Figure 4 illustrates a dialog display generated during operation of an embodiment of the present disclosure.

Figure 5 illustrates a method flow diagram representative of the method of operation of an embodiment of the present disclosure.

### Detailed Description

The present disclosure, accordingly, advantageously provides an apparatus, and an associated method, by which to provide identification to an image captured at a portable electronic device, such as a cellular telephone having camera functionality.

Through operation of an embodiment of the present disclosure, a manner is provided by which to tag the image with a geographical identifier, which is related to the position of the portable electronic device when the image is captured.

In one aspect of the present disclosure, the tag is used to name a digital file that forms the captured image. Because the image file is named with a geographical identifier, a user is better able later to identify the file quickly by viewing the geographically-descriptive name of the file.

In another aspect of the present disclosure, the portable electronic device includes a display element forming a view finder when a camera function is to be performed. The view finder displays a representation of the image that shall be captured when a user of the device elects to capture the image. And, once the image is captured, the viewfinder displays the captured image.

In another aspect of the present disclosure, the portable electronic device is capable of determining the location thereof, such as through reception of signals sent thereto or by being provided with the location of the device. The signals received at the device form, in one implementation, terrestrial-based signals, such as signals transmitted by cellular base stations. And in another implementation, the received signals comprise satellite-originated signals, such as GPS (Global Positioning System) signals.

In another aspect of the present disclosure, the portable electronic device determines the location of the device in terms of latitudinal and longitudinal coordinates. The determined coordinate position is used at the device to determine, or otherwise obtain, the city, state or province, and country associated with the latitudinal and longitudinal coordinates. Alternately, other geographical indicia is associated with the coordinates. Such alternate geographical indicia includes, for instance, names of known geographical locations, e.g., sites such as the Statue of Liberty, etc.

In another aspect of the present disclosure, the image, once captured, is stored in a desired format such as a JPEG format. And, the position of the device at the time of, or in time proximity to, the capturing of the image is stored as metadata associated with the file. The longitudinal and latitudinal coordinates of the device are stored, e.g., as EXIF data.

In another aspect of the present disclosure, the geographical indicia determined or obtained by the portable electronic device is used as a tag to name the captured image, stored as an image file. That is to say, the geographical identifier comprises at least part of the location of the device obtained or determined from the latitudinal and longitudinal coordinates. In one implementation, the identification of the city is combined with the date on which the image is captured. Because the image files are named with geographical indicia, the files are more easily identified by one subsequently searching for an image from amongst a plurality of stored images to retrieve.

In another aspect of the present disclosure, user-interface inputs and displays are provided. The inputs provide for user control over operation of the position and location determination and additional operation relating to tagging of the captured images with geographical indicia. In one implementation, for instance, an input actuator is provided by which to turn-on and turn-off operation of the device to perform location determination and tagging of images. If selection is made to perform location determination and tagging, *viz.*, the user turns-on the location determination and tagging functionality, the device operates to determine the location thereof. And an image captured in time proximity to the location determination is named with geographical indicia identifying the location of the device when the image is captured. When the location is obtained, a display element displays the location, e.g., by overlaying the location information is overlaid upon the image displayed in a viewfinder display. The overlay is displayed, e.g., at a top portion of the viewfinder display. In one implementation, the location is overlaid for a limited period or, upon user selection, the information is contained continuously, at least while the device is operated in a camera mode to provide camera functionality.

In these and other aspects, therefore, an apparatus, and an associated method, is provided for facilitating marking of an image captured at a portable electronic device. A location determiner is provided by which to determine geographic positioning of the portable electronic device in time proximity with capturing of the image. And, an image tagger is provided by which to tag an image with the geographical indicia, which is associated with the geographic positioning determined by the location determiner.

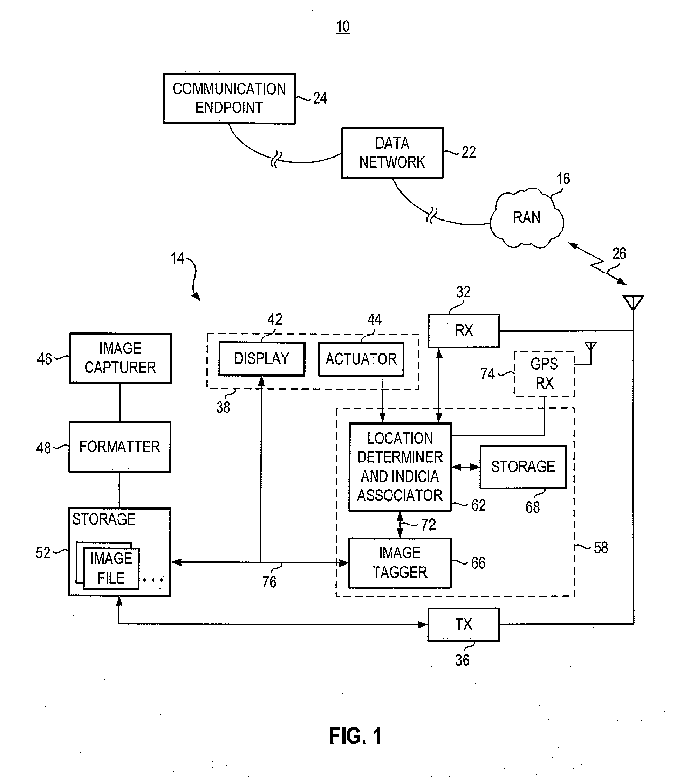

Turning first, therefore, to Figure 1, an exemplary communication system, shown generally at 10, provides for communications with wireless devices, of which the mobile device 14 is representative. The communication system 10 here includes a Radio Access Network (RAN) 16 operable in general conformity with a selected cellular communication system standard. And, in the exemplary implementation, the mobile device 14 is also operable to communicate in conformity with the communication standard with which the Radio Access Network conforms. More generally, the mobile device 14 is representative of any of various portable electronic devices, including devices that need not be placed in communication connectivity with a terrestrial, radio communication system. While the following descriptions shall describe an exemplary implementation in which the mobile device is operable with the network infrastructure shown in the exemplary implementation of Figure 1, it should be understood that in various implementations, the mobile device 14 can be constructed to be operable in other manners and configured in other schemes.

The Radio Access Network 16 is coupled to a data network 22, such as the Internet. And, a communication endpoint 24, such as a computer workstation or a telephonic station, is placed in communication with the data network, either directly or indirectly.

In the exemplary implementation, the mobile device is placeable in communication connectivity with the communication endpoint 24 to provide for, e.g., communication of messages and files, such as image files forming photographic or other video representations. Information, such as a file maintained at the mobile device is communicated, by way of a radio air interface 26, through the Radio Access Network 16, the data network 22, and delivered to the communication endpoint 24. Once delivered to the communication endpoint, the information is viewed or otherwise acted upon.

The mobile device 14 includes transceiver circuitry, here represented by a receive part 32 and a transmit part 36 that operates to transceive communication signals with the Radio Access Network 16 by way of the radio air interface 26. The mobile device further includes a user interface 38, here including a display element 42 and input actuators 44.

The mobile device also includes an image capturer 46 including, for example, a camera lens and transducer for converting light energy into electrical form in conventional manner. In operation, when the mobile device is used to capture an image, the image, once captured, is formatted, here by a formatter 48 and then stored or buffered at a storage element 52.

As mentioned previously, the mobile devices sometimes have large storage capacities permitting large numbers of captured images to be stored or at least obtained and then communicated elsewhere, such as to the communication endpoint 24. While conventional techniques provide for uniquely identifying image files, existing schemes generally provide nondescriptive, e.g., numerical, identification of the image files or, alternately, require time-intensive, manual entry by a user to provide unique identifiers to the image files. Pursuant to an embodiment of the present disclosure, a manner is provided by which to facilitate the naming of image files of captured images, such as images captured by the image capturer 46. The image files are formatted in any of various formats including, for example, a JPEG format and, when sequences of images are stored, a WMV format.

To facilitate such naming, the mobile device further includes an apparatus 58 of an embodiment of the present disclosure. The apparatus is functionally represented, implemented in any desired manner, including hardware implementations with hardware elements, software implementations using algorithms executed by a processor, and combinations thereof. The apparatus 58 is shown to include a location determiner and geographical indicia associator 62 and an image tagger 66. A storage entity 68 is also provided, accessed during operation of the determiner and associator 62.

Operation of the apparatus 58 is initiated through user actuation of an appropriate input actuator 44. Responsive to the user actuation, the determiner and associator 62 operates to determine the location of the mobile device. In one implementation, the determiner makes the determination through use of terrestrial signals received by the receive part 32 of the transceiver circuitry. The terrestrial signals comprise, e.g., base-station-transmitted signals from which the determiner is able to determine the location of the mobile device. In another implementation, the mobile device receives satellite-based signals at a GPS (Global Positioning System) receiver 74. And, indications of the received signals are used to determine the location of the mobile device.

The location determiner determines the location of the mobile device in terms of latitudinal and longitudinal coordinates. And, these determined coordinates are used to determine, or otherwise obtain a geographical indicia that is associated with the coordinates.

In one implementation, the storage element 68 stores geographical indicia indexed together with latitudinal and longitudinal coordinates. The storage element is accessed once determination is made of the coordinates of the location at which the mobile device is positioned. The storage element is accessed to obtain the associated geographical indicia stored thereat. In another implementation, the geographical indicia is obtained externally. For instance, once the location coordinates have been ascertained, a query is caused to be sent by the transmit part 36 to an external location and a response to the query is returned to the mobile device that includes the geographical indicia.

Once the geographical indicia is obtained, representations of the geographical indicia are provided to the image tagger 66, here represented by way of the line 72. The image tagger operates to form a tag that includes at least part of the geographical indicia. The tag is associated with an image captured by the image capturer and stored or cached at the storage element 52, which is captured in time proximity to the location determination by the determiner and associator 62. The tag is provided, by way of the line 74, to the storage element 52 and is associated with the stored image file. In one implementation, the location of the mobile device is determined when decision is made by a user to capture an image, such as through actuation of an input actuator of the actuators 44. And, in one implementation, the longitudinal and latitudinal coordinates of the mobile device determined by the determiner 62 are also used to tag stored image files. In an exemplary implementation in which the image files stored or cached at the storage element 52 comprise JPEG files, the coordinates of the location of the mobile device when the image is captured is stored as EXIF data, or other metadata, associated with the JPEG image file. And, in an alternate implementation, the tag comprises the determined coordinates.

In the exemplary implementation, at least a portion of the geographical indicia is used to name the image file. For instance, the captured image is named by the city identified in the geographical indicia together with the year, month, and day at which the image is captured. In the event that the location cannot be determined by the determiner, the image is named with the date upon which the image is captured. And, if multiple images are captured, the images are further numbered, e.g., sequentially. Numbering, e.g., includes a five digit sequence. And, for instance, in various implementations, the geographical indicia is including in the file name, either at the beginning of the file name, or at the end of the file name.

Additionally, in the exemplary implementation, the image tagger provides an indication of the geographical indicia, or at least a portion thereof, to the display element 42, also indicated by way of the line 74. When provided to the display element, the geographical indicia is displayed together with the image that appears in the viewfinder of the display. The tag appears either momentarily, e.g., for a six-second duration, or continuously during the display of the image. In such manner, user of the mobile device is provided with information relating to the tag that is used to name the captured image or image that is to be captured.

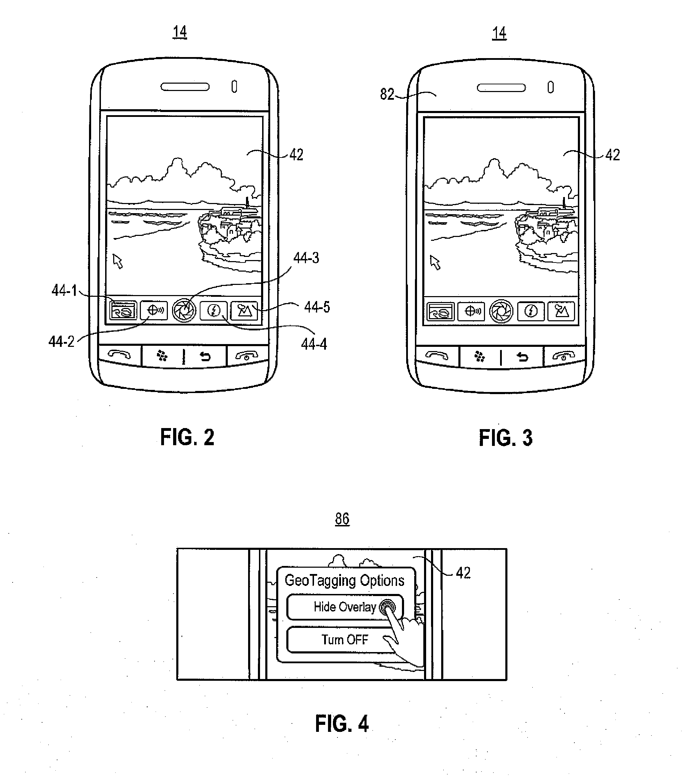

Figure 2 illustrates an example mobile device 14, showing a display element 42 and user actuators 44 of a mobile device operable pursuant to an embodiment of the present disclosure. In the illustrated implementation, the camera functionality provides for automatic focusing of images displayed in the viewfinder of the display 42. In an implementation (not shown) that requires manual focus, a viewfinder box is also displayed to provide for focusing by a user on the desired image that is to be captured. A first actuator 44-1 comprises a camera roll of stored image files. A second actuator 44-2 forms a geographical location actuator whose actuation initiates operation of the apparatus 58, shown in Figure 1. The input actuator 44-3 comprises an aperture actuator, whose actuation captures the image displayed at the viewfinder. The input actuator 44-4 comprises a flash-setting actuator to turn-on or turn-off a camera flash. And, the input actuator 44-5 comprises a camera preset, whose actuation provides access to camera presets.

When a user of the mobile device elects to utilize the functionality of the apparatus 58, the user actuates the input actuator 44-2. That is to say, actuation turns-on the functionality of the apparatus 58. Upon actuation, the location of the user is determined and the associated geographical indicia is determined or obtained.

Figure 3 again illustrates the mobile device, here also showing display of geographical indicia 82 caused, pursuant to operation of an embodiment of the present disclosure, to be displayed at the display 42 of the user interface. In the exemplary implementation, if the geographical indicia is too long to fit on a single line, a second line of text is utilized together with the indicator image being vertically centered.

The functionality provided pursuant to embodiment of the present disclosure provides for the tagging of captured images with the position of the mobile device in terms of latitudinal and longitudinal coordinates. And, therefrom, the location, in terms of, e.g., city, state/province, and country is further determined. And, as described above, this information, not only is displayed as the display 82, but is further used to name the image file of the captured image.

In the exemplary implementation, the user of the mobile device selects whether continuously to display the display 82 containing the geographical indicia at the display element 42 or to display the display for only a limited time period.

Figure 4 illustrates a dialog 86 providing for user selection of whether to have the overlay continuously displayed at the display element 42 or to be removed subsequent to the six-second or other time period. When the user elects to hide the overlay, the overlay is removed. Otherwise, the overlay is displayed continuously. While not separately shown, an analogous dialog is displayable on the display when the overlay is not shown, but the user elects to have the overlay displayed, and analogous dialog selection is provided to the user.

The following tables illustrate exemplary use cases, cases 1, 2, 3, and 4, which illustrate alternate operational selections and parameters of an embodiment of the present disclosure.

**Use case 1**

| | |
|---|---|
| **System intends to accomplish** | Turn on geo-tagging / geo-location |
| **Initial state of the system** | Camera is in the viewfinder. Geo-tagging is "off", Location Services is enabled. |
| **Actor's (user) actions to achieve goal** | Clicks the geo-tagging / geo-location button. |
| **Inputs/responses that lead to goal** | • Button displays the "Finding location" image. |
| | • Viewfinder displays "Finding Current Location ..." |

**Use case 2**

| | |
|---|---|
| **System intends to accomplish** | Turn on geo-tagging / geo-location |
| **Initial state of the system** | Camera is in the viewfinder. Geo-tagging is "off", Location Services is disabled. |
| **Actors (user) actions to achieve goal** | Clicks the geo-tagging / geo-location button. |
| **Inputs/responses that lead to goal** | • Geo-tagging/ geo-location button is disabled. |

**Use case 3**

| | |
|---|---|
| **System intends to accomplish** | Turn on geo-tagging / geo-location |
| **Initial state of the system** | Camera is in the viewfinder. Geo-tagging is "off", Location services is enabled, Radio, WiFi is off |
| **Actor's (user) actions to achieve goal** | Clicks the geo-tagging / geo-location button. |
| **Inputs/responses that lead to goal** | • Geo-tagging/ geo-location button is disabled (Reverse geocoding will not be possible). |

**Use case 4**

| | |
|---|---|
| **System intends to accomplish** | Display users location on the viewfinder |
| **Initial state of the system** | Camera is in the viewfinder. A reverse geo-coding search is in progress. |
| **Actor's (LBS) actions to achieve goal** | Returns a valid location. |
| **Inputs/responses that lead to goal** | • Button displays the "found location" image. |
| | • Viewfinder displays "City, State/Province, Country" |

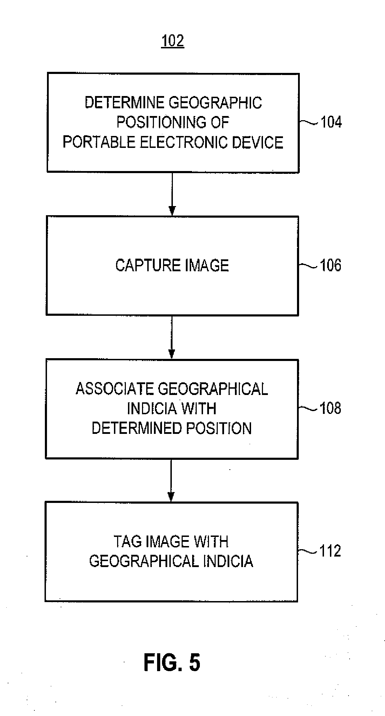

Figure 5 illustrates a method flow diagram, shown generally at 102, representative of the method of operation of an embodiment of the present disclosure. The method facilitates marking of an image captured at a portable electronic device with geographical indicia.

First, and as indicated by the block 104, the geographic positioning of the portable electronic device in time proximity to the capturing of the image is determined. The geographic positioning is determined, for example, using received, terrestrial signals, received, satellite signals, or otherwise obtaining positioning information.

And, as indicated by the block 106, the image is captured through camera functionality of the device. And, as indicated by the block 108, geographical indicia is associated with the determined geographic positioning. Then, and as indicated by the block 112, the image is tagged with the geographical indicia. Tagging includes, for instance, naming an image file of the captured image with the geographical indicia.

Thereby, a manner is provided by which to tag a captured image with geographical indicia. The user is better able subsequently to identify the stored image through association of a geographical indicia with the stored image.

The previous descriptions are of preferred examples for implementing the disclosure, and the scope of the disclosure should not necessarily be limited by this description. The scope of the present disclosure is defined by the following claims.

## Claims

1. An apparatus for facilitating marking of an image captured at a portable electronic device with a geographical indicia, said apparatus comprising
a location determiner configured to determine geographic positioning of the portable electronic device in time proximity to capturing of the image; and
an image tagger configured to tag the image with the geographical indicia associated with the geographic positioning determined by said location determiner.

2. The apparatus of claim 1 wherein said location determiner is configured to determine the geographic positioning of the portable electronic device using received, terrestrial signals.

3. The apparatus of claim 1 wherein said location determiner is configured to determine the geographic positioning of the portable electronic device using received, GPS, Global Positioning System, signals.

4. The apparatus of claim 1 wherein the portable electronic device comprises an image display configured to display the image and wherein said image tagger is configured to tag the captured image, when displayed upon the image display.

5. The apparatus of claim 1 wherein the image captured at the portable electronic device comprises a digital image formatted in an image file format, and wherein said image tagger is configured to tag the digital image with metadata formatted in conformity with the image file format.

6. The apparatus of claim 1 further comprising a user-actuable actuator, and wherein said location determiner is configured to determine the geographic positioning responsive to actuation of said user-actuable actuator.

7. The apparatus of claim 1 wherein said location determiner is configured to determine longitudinal and latitudinal coordinates of the portable electronic device.

8. The apparatus of claim 1 wherein said location determiner is further configured to associate the geographical indicia with the longitudinal and latitudinal coordinates of the portable electronic device.

9. The apparatus of claim 8 wherein the geographical indicia comprises a geographic name of a geographic location in proximity to the latitudinal and longitudinal coordinates.

10. The apparatus of claim 9 wherein said location determiner further comprises a storage element containing a listing having geographic names indexed together with latitudinal and longitudinal coordinates and wherein said location determiner is configured to associate the geographic indicia with the longitudinal and latitudinal coordinates through access to the listing.

11. The apparatus of claim 9 wherein the geographical indicia is externally-provided to the portable electronic device.

12. A method for facilitating marking of an image captured of a portable electronic device with a geographical indicia, said method comprising:
determining geographic positioning of the portable electronic device in time proximity to capturing of the image by the portable electronic device; and
tagging the image with the geographical indicia associated with the geographic positioning determined during said determining.

13. The method of claim 12 further comprising associating the geographical indicia with the geographic positioning determined during said determining.

14. The method of claim 13 wherein said determining comprises receiving position-identifying signals at the portable electronic device.

15. The method of claim 12 wherein said tagging the image comprises naming the image using the geographical indicia.
